# EUROPÄISCHE PATENTANMELDUNG

(11) **EP 2 339 698 A2**
(43) Veröffentlichungstag der Anmeldung: **29.06.2011**
(21) Anmeldenummer: 10177288.7
(22) Anmeldetag: 17.09.2010
(51) Int. Cl.: H01R 13/453

(54) **Elektrische Steckvorrichtung**

(30) Priorität: 24.12.2009 DE 102009060379
(71) Anmelder: Albrecht Jung GmbH & Co. KG, 58579 Schalksmühle (DE)
(72) Erfinder: Ehrental, Frank, 58256, Ennepetal (DE); Maslow, Stefan, 58339, Breckerfeld (DE); Koch, Eckhard, 58091, Hagen (DE); Schmidt-Sinderhauf, Heinz, 58540, Meinerzhagen (DE); Engel, Volker, 58507, Lüdenscheid (DE); Schäfer, Dirk, 58579, Schalksmühle (DE); Schmale, Wolfgang, 58553, Halver (DE); Soleinsky, Stefan, 58566, Kierspe (DE)

(57) **Zusammenfassung**

Es wird eine elektrische Steckvorrichtung bzw. Schutzkontaktsteckdose vorgeschlagen, welche mit einer Berührungsschutzvorrichtung versehen ist, die die zur Einführung der beiden Steckerstifte vorgesehenen Steckeröffnungen automatisch sperrt und nur dann freigibt, wenn die beiden Steckerstifte des Steckers gleichzeitig in die Steckeröffnungen eingeführt werden. Zu dem Zweck, eine elektrische Steckvorrichtung zu schaffen, dessen Berührungsschutzvorrichtung bei zuverlässiger Funktionsweise besonders einfach aufgebaut und montagetechnisch besonders vorteilhaft unterzubringen ist, kommt das federbelastete Sperrelement mit seiner Oberseite gleitend an der den Kontaktteilen zugewandten Innenfläche einer am Sockelteil festlegbaren Lösehebeleinrichtung zur Anlage und sind die mit dem Sperrelement zusammenwirkenden Steuermittel einstückig an der Innenfläche der Lösehebeleinrichtung vorhanden.

## Beschreibung

Die vorliegende Erfindung geht von einer entsprechend dem Oberbegriff des Hauptanspruch konzipierten elektrischen Steckvorrichtung der Gebäudesystemtechnik aus.

Derartige elektrische Steckvorrichtungen sind in der Regel dafür vorgesehen, nach Bedarf über einen entsprechend ausgebildeten Stecker und gegebenenfalls eine daran angeschlossene elektrische Leitung eine leicht wieder trennbare elektrisch leitende Verbindung zu einem Verbraucher herzustellen. Oftmals sind solche elektrischen Steckvorrichtungen mit einer Berührungsschutzvorrichtung versehen, die einen erhöhten Berührungsschutz bietet. Oftmals werden solche Berührungsschutzvorrichtungen auch als Kindersicherung bezeichnet. Der erhöhte Berührungsschutz wird durch die Verwendung eines Sperrelementes verwirklicht, welches z. B. als Schiebestück, als Drehstück usw. ausgebildet sein kann. Ein solches Sperrelement schirmt automatisch die spannungsführenden Kontakte der elektrischen Steckvorrichtung ab bzw. sperrt die beiden Steckeröffnungen, sobald der Stecker aus der Schutzkontaktsteckdose bzw. Steckvorrichtung herausgezogen wurde. Die Berührungsschutzvorrichtung ist dabei so geschaffen, dass ein einfaches Einführen von anderen Gegenständen als das Einführen eines zugehörigen Steckers wirkungsvoll verhindert wird. Nur beim Einführen eines geeigneten Steckers wird das Sperrelement beiseite geschoben und gibt damit die Steckeröffnungen frei, so dass die Steckerstifte des geeigneten Steckers ordnungsgemäß mit den spannungsführenden Kontaktteilen der Steckvorrichtung in Verbindung treten können.

Eine dem Oberbegriff des Hauptanspruches entsprechende elektrische Steckvorrichtung ist durch die DE 1 440 799 OS bekannt geworden. Eine solche elektrische Schutzkontaktsteckdose ist mit einem, die zur Kontaktierung der Steckerstifte sowie der elektrischen Kabel notwendigen Kontaktteile aufnehmenden, einen Träger aufweisenden Sockelteil versehen. Am Sockelteil ist ein zur Aufnahme des anzuschließenden Steckers vorgesehenes Steckdosenzentralstück befestigbar, wobei eine Berührungsschutzvorrichtung vorgesehen ist, die die zur Einführung der beiden Steckerstifte vorgesehenen Steckeröffnungen automatisch sperrt und nur dann freigibt, wenn die beiden Steckerstifte des Steckers gleichzeitig in die Steckeröffnungen eingeführt werden. Dabei ist zumindest ein Sperrelement vorgesehen, welches von zumindest zwei Federelementen beaufschlagt wird. Das Sperrelement bzw. die Sperrelemente und die zugehörigen Federelemente sind zur Unterbringung in einer Abdeckplatte vorgesehen, was insgesamt einen nicht unerheblichen Aufwand bedeutet.

Der vorliegenden Erfindung liegt deshalb die Aufgabe zugrunde, eine elektrische Steckvorrichtung bzw. Schutzkontaktsteckdose zu schaffen, dessen Berührungsschutzvorrichtung bei zuverlässiger Funktionsweise besonders einfach aufgebaut und montagetechnisch besonders vorteilhaft unterzubringen ist.

Die vorliegende Aufgabe wird durch die im Hauptanspruch angegebenen Merkmale gelöst.

Bei einer solchermaßen ausgebildeten elektrischen Steckvorrichtung bzw. Schutzkontaktsteckdose ist besonders vorteilhaft, dass die Berührungsschutzvorrichtung gemeinsam mit einer Lösehebeleinrichtung eine einfach herzustellende und leicht zu montierende Baugruppe bildet, die Sockelseitig nicht durch eine Gehäusewand verschlossen ist, so dass die Baugruppe bei sehr flacher Bauweise aus einer besonders geringen Anzahl von Einzelteilen besteht.

Weitere vorteilhafte Ausgestaltungen sind in den Unteransprüchen angegeben. Anhand eines in den Zeichnungen näher dargestellten Ausführungsbeispieles sei der erfindungsgemäße Gegenstand näher erläutert. Dabei zeigen:

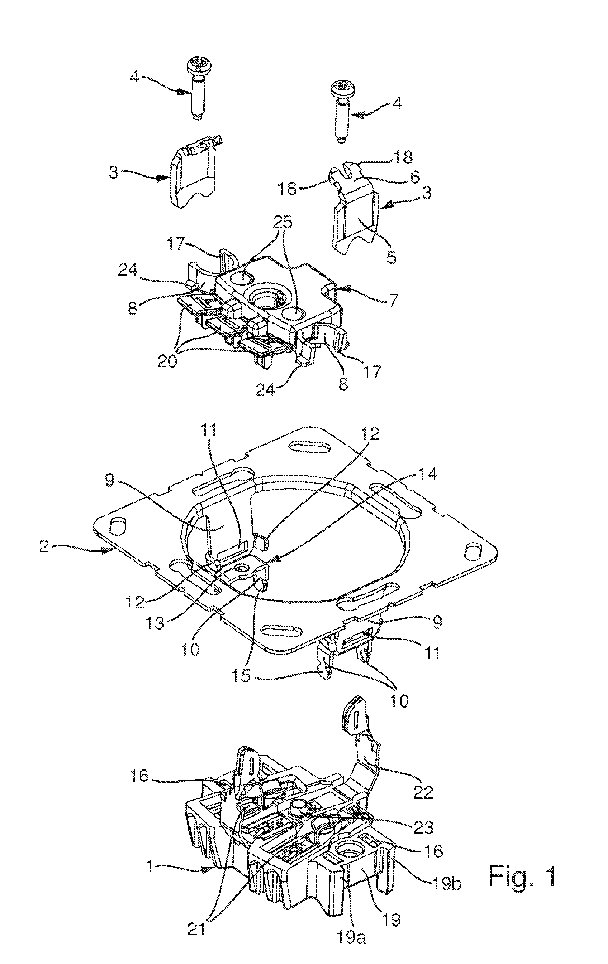

- Fig. 1:: prinziphaft eine solche elektrische Steckvorrichtung räumlich in Explosionsdarstellung ;
- Fig.: 2: prinziphaft die Lösehebeleinrichtung, das Sperrelement und die Schraubendruckfeder räumlich als Unteransicht in Explosionsdarstellung;
- Fig.: 3: prinziphaft die Lösehebeleinrichtung, das Sperrelement und die Schraubendruckfeder räumlich als Draufsicht in Explosionsdarstellung und die elektrische Steckvorrichtung ohne Lösehebeleinrichtung räumlich in Draufsicht.

Wie aus den Figuren hervorgeht, besteht eine solche elektrische Steckvorrichtung bzw. Schutzkontaktsteckdose im Wesentlichen aus einem aus Kunststoff bestehenden, zur Aufnahme von Funktionselementen vorgesehenen Gehäuse, mit einem Sockelteil 1 an welchem ein Träger 2 und zwei jeweils eine Spreizkralle 3 und eine Spreizschraube 4 aufweisende Befestigungseinrichtungen festgelegt sind. Jede Spreizkralle 3 ist etwa L-förmig ausgebildet und weist einen Basisschenkel 5 und einen Bedienschenkel 6 auf. Am Sockelteil 1 ist eine zum Gehäuse gehörige Lösehebeleinrichtung 7 festgelegt, welche an zwei sich gegenüberliegenden Seitenwänden jeweils eine Rasteinrichtungen 8 aufweist.

Wie des weiteren aus den Figuren hervorgeht, ist der Träger 2 als Tragring ausgeführt, an den wie üblich, zwei Befestigungsbeine 9 angeformt sind. Jedes der beiden Befestigungsbeine 9 ist mit zwei Befestigungsstegen 10, einer Durchstecköffnung 11 und zwei Haltelaschen 12 versehen. Zudem ist jedes Befestigungsbein 9 mit einer, mit einer Spreizschraube 4 zusammenwirkenden Gewindeausnehmung 13 versehen. Zwei Befestigungsstege 10 und eine Gewindeausnehmungen 13 sind jeweils an bzw. in einem vom Befestigungsbein 9 abgewinkelten Befestigungsfuß 14 vorhanden. An seinem freien Endbereich ist jeder Befestigungssteg 10 mit einem abgesetzten Verdrehstück 15 versehen. Im Sockelteil 1 ist für jeden der vier Befestigungsstege 10 eine Befestigungsdurchführung 16 vorhanden. Zur Befestigung des Trägers 2 am Sockelteil 1 werden zunächst die vier Befestigungsstege 10 durch ihre zugehörige Befestigungsdurchführung 16 gesteckt und anschließend werden die Verdrehstücke 15 verdreht, so dass diese mit ihrem Schulterbereich am Boden des Sockelteils 1 zur Anlage kommen und somit eine dauerhafte, sichere Befestigung des Trägers 2 am Sockelteil 1 geschaffen ist.

Wie des weiteren aus den Figuren hervorgeht, sind die beiden Rasteinrichtungen 8 einstückig an die Lösehebeleinrichtung 7 angeformt und jeweils U-förmig ausgeführt. Um eine zuverlässige Verrastung mit der jeweils zugeordneten Spreizkralle 3 herzustellen, sind an die Innenfläche einer jeden Rasteinrichtung 8 zwei Rastnasen 17 angeformt, die sich gegenüberliegend an den freien Enden der Rasteinrichtung 8 befinden. Durch die U-förmige Ausbildung der beiden Rasteinrichtungen 8 entsteht eine gute Federwirkung, so dass sowohl eine sichere Halterung der Spreizkrallen 3 in ihrer Montageposition gewährleistet ist und diese als auch bei Bedarf einfach wieder aus ihrer Montageposition herausgenommen werden können. Außerdem sind, um eine gut wirksame und sichere Rastverbindung zu gewährleisten an jedem Bedienschenkel 6 der beiden Spreizkrallen 3 zwei Rasthaken 18 angeformt, die sich jeweils am freien Endbereich der Bedienschenkel 6 befinden und in der gesicherten Montageposition mit den Rastnasen 17 der beiden Rasteinrichtungen 8 in Wirkverbindung kommen. Um während der Verstellung eine gute Führung der Spreizkrallen 3 zu gewährleisten, umgeben die U-förmig ausgebildeten Rasteinrichtungen 8 den freien Endbereich des zugehörigen Bedienschenkels 6 der zugeordneten Spreizkralle 3. Zur Montage werden die Spreizkrallen 3 mit ihren Bedienschenkeln 6 durch die zugehörige Durchstecköffnung 11 des Trägers 2 gesteckt und kommen dann mit ihrem gabelartig ausgebildeten Bedienschenkel 6 zwischen dem Kopf und dem Absatz der zugehörigen Spreizschraube 4 zu liegen. Bei diesem Vorgang wird auch gleichzeitig die Rastsicherung mit der zugehörigen Rasteinrichtung 8 hergestellt. Somit ist nicht nur eine einfache und komfortable Montage der Spreizkrallen 3 möglich, sondern außerdem ist sichergestellt, dass die Spreizkrallen 3 einfach und komfortabel verstellt werden können.

Wie insbesondere aus Figur 1 hervorgeht, weist das Sockelteil 1 zwei Aufnahmetaschen 19 zur geschützten Aufnahme der beiden Spreizkrallen 3 auf. Jede Aufnahmetasche 19 wird im Wesentlichen durch zwei vorstehende einstückig an das Sockelteil 1 angeformte Längsstege 19a, 19b gebildet. In der sogenannten "Parkposition" befindet sich die Spreizkralle 3 maximal zurückgezogen in ihrer Aufnahmetasche 19, so dass nicht nur eine komfortable Handhabung durch den Installateur bzw. Benutzer gewährleistet ist, sondern auch die Gefahr während der Installationsarbeiten elektrische Leitungen zu verletzen minimiert ist. Aus ihrer "Parkposition" können die Spreizkrallen 3 auf einfache Art und Weise herausbewegt werden, indem die Spreizschrauben 4 entsprechend verdreht werden, bis z. B. die "Festlegeposition" erreicht ist. Auf gleiche Art und Weise bei umgekehrter Verdrehung der Spreizschrauben 4 können die Spreizkrallen 3 wieder in ihre "Parkposition" zurückgeführt werden. Um eine besonders stabile Ausführung der Spreizkrallen 3 zu erreichen, weisen deren Basisschenkel 5 als Versteifungen wirkende Einprägungen und Abwinklungen auf.

Wie des weiteren aus den Figuren hervorgeht, sind einstückig an die Lösehebeleinrichtung 7 drei elastisch auslenkbare Lösehebel 20 angeformt, welche mit ihrem Betätigungsnocken bei Betätigung jeweils auf das zugeordnete Federelement der drei im Sockelteil 1 befindlichen elektrischen Kontaktteile 21 einwirkt. Wie üblich, steht eines der elektrischen Kontaktteile 21 mit dem Erdungsbügel 22 in Verbindung und sind die beiden anderen Kontaktteile 21 zur Kontaktierung der beiden Steckerstifte eines einzuführenden Steckers vorgesehen. Die Lösehebeleinrichtung 7 ist zur Komplettierung des Gehäuses durch eine zentral angeordnete Bördelbuchse 23 dauerhaft am Sockelteil 1 festzulegen. Außerdem kommen die vier an den Träger 2 angeformten Haltelaschen 12 jeweils haltend an entsprechend an die Lösehebeleinrichtung 7 angeformte Haltebereiche 24 zur Anlage. Beim vorliegenden Ausführungsbeispiel sind die vier Haltebereiche 24 an die Außenwandungen der beiden Rasteinrichtungen 8 der Lösehebeleinrichtung 7 angeformt. Außerdem ist beim vorliegenden Ausführungsbeispiel die Lösehebeleinrichtung 7 mit Seitenwandungen versehen, um somit eine gute Basis zur Aufnahme einer sogenannten Berührungsschutzvorrichtung (Kindersicherung) zu bilden. Eine solche Berührungsschutzvorrichtung ist dafür vorgesehen, die zur Einführung der beiden Steckerstifte vorgesehenen Steckeröffnungen 25 automatisch zu sperren und nur dann freizugeben, wenn die beiden Steckerstifte des Steckers, -der Einfachheit halber nicht dargestellt-, gleichzeitig in die Steckeröffnungen 25 eingeführt werden. Zu diesem Zweck ist ein federbelastetes Sperrelement 26 vorgesehen, welches mit seiner Oberseite 27 gleitend an der den Kontaktteilen 21 zugewandten Innenfläche 28 der am Sockelteil 1 festlegbaren Lösehebeleinrichtung 7 zur Anlage kommt. Zu diesem Zweck sind mit dem Sperrelement 26 zusammenwirkende erste Steuermittel 29, zweite Steuermittel 30 und dritte Steuermittel 31 einstückig an der Innenfläche 28 der Lösehebeleinrichtung 7 vorhanden. Als Federmittel ist eine einzige Schraubendruckfeder 32 vorgesehen und das Sperrelement 26 ist als ein einziges Schiebestück ausgebildet.

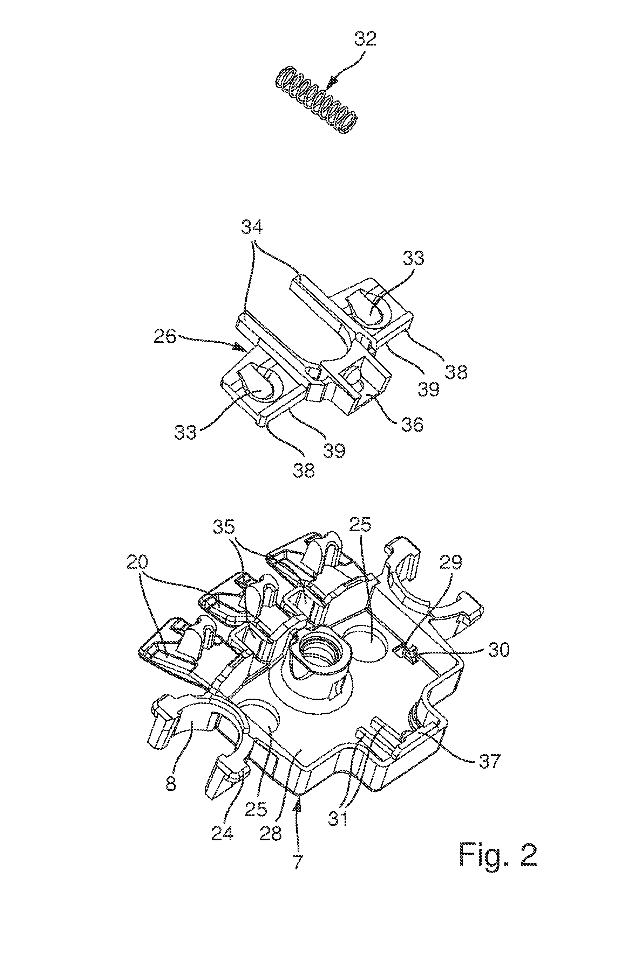

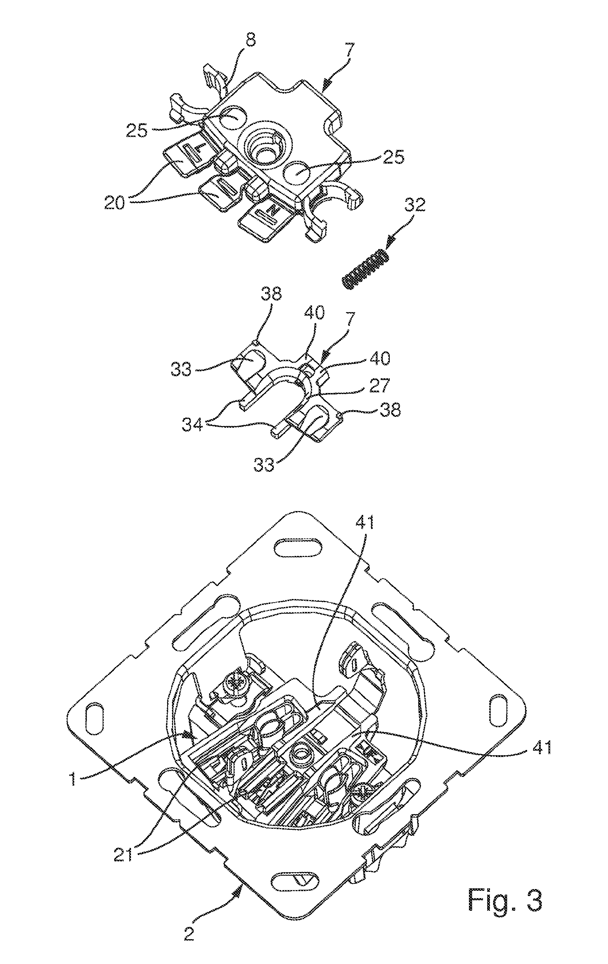

Wie insbesondere aus Figur 2 und Figur 3 hervorgeht, sind an die Oberseite 27 des Sperrelementes 26 zwei Sperrklinken 33 angeformt, deren den Steckerstiften zugewandte Außenfläche jeweils als schiefe Ebene ausgeführt ist. Die beiden Sperrklinken 33 kommen in der Sperrstellung des Sperrelementes 26 in den beiden Steckeröffnungen 25 der Lösehebeleinrichtung 7 zu liegen. Außerdem sind zwei Führungsstege 34 an das Sperrelement 26 angeformt, die zur Führung des Sperrelementes 26 in entsprechend ausgebildete Führungsausnehmungen 35 der Lösehebeleinrichtung 7 eingreifen, womit zudem auch ein Verdrehen des Sperrelementes 26 wirkungsvoll verhindert ist. Den beiden Führungsstegen 34 gegenüberliegend ist eine Aufnahme 36 für die Schraubendruckfeder 32 am Sperrelement 26 vorhanden. Einerseits greift die Schraubendruckfeder 32 in die Aufnahme 36 des Sperrelementes 26 ein und stützt sich andererseits an eine entsprechend ausgebildete Stützstelle 37 der Lösehebeleinrichtung 7 ab. Somit ist sichergestellt, dass nach dem Entfernen des Steckers aus der Schutzkontaktsteckdose eine automatische Sperrung der beiden Steckeröffnungen 25 erfolgt, weil die Schraubendruckfeder 32 das Sperrelement 26 dann zuverlässig automatisch in seine Sperrstellung verschiebt.

In die Innenfläche 28 sind zwei als Ausnehmungen ausgebildete erste Steuermittel 29 eingeformt, welche jeweils mit einer entsprechend ausgeführten Steuernase 38 des Sperrelementes 26 zusammenwirken. Die beiden Steuernasen 38 sind an zwei gegenüberliegend angeordnete Außenbereiche der Oberseite 27 des Sperrelementes 26 angeformt. Außerdem sind zwei zweite Steuermittel 30 an die Innenfläche 28 der Lösehebeleinrichtung 7 angeformt, welche jeweils als Steuerzapfen ausgeführt sind, und welche sich in direkter Nachbarschaft zu jeweils einem ersten Steuermittel 29 befinden. Die beiden zweiten Steuermittel 30 wirken mit jeweils einer am Sperrelement 26 vorhandenen Steuerfläche 39 zusammen. Zudem sind zwei dritte Steuermittel 31 an die Innenfläche 28 der Lösehebeleinrichtung 7 angeformt, welche jeweils als Steuerrampe ausgeführt sind und die jeweils mit einer am Sperrelement 26 vorhandenen Rampenfläche 40 zusammenwirken. Die beiden als Steuerrampen ausgeführten dritten Steuermittel 31 sind jeweils den Führungsausnehmungen 35 gegenüberliegend an die Innenfläche 28 der Lösehebeleinrichtung 7 angeformt. Die Führungsausnehmungen 35 sind dabei den drei Lösehebeln 20 nah in der Lösehebeleinrichtung 7 vorhanden, wohingegen die dritten Steuermittel 31 entfernt von den drei Lösehebeln 20 an der Lösehebeleinrichtung 7 angeordnet sind. Wird das Sperrelement 26 verschoben gleitet der zugeordnete Flächenbereich der Oberseite 27 auf den beiden dritten Steuermitteln 31 und gleiten zudem die unteren Flächen der beiden Führungsstege 34 auf den entsprechend ausgeführten Gleitflächen 41 des Sockelteils 1.

Somit ist eine Berührungsschutzvorrichtung realisiert, die bei zuverlässiger Funktionsweise besonders einfach aufgebaut ist und sich montagetechnisch vergleichsweise einfach unterbringen lässt. Die Berührungsschutzvorrichtung stellt gemeinsam mit der Lösehebeleinrichtung 7 eine einfach herzustellende und leicht zu montierende, gegebenenfalls mit einer Transportsicherung versehene Baugruppe dar, die sockelseitig nicht durch eine Gehäusewand verschlossen ist, so dass die Baugruppe bei sehr flacher bauweise aus einer besonders geringen Anzahl von Einzelteilen besteht. Durch eine dermaßen ausgebildete Berührungsschuztuvorrichtung ist zuverlässig auf einfache Art und Weise gewährleistet, dass das Sperrelement die spannungsführenden Kontaktteile 21 der elektrischen Steckvorrichtung automatisch abschirmt bzw. die beiden Steckeröffnungen 25 automatisch sperrt, sobald der Stecker aus der Schutzkontaktsteckdose bzw. Steckvorrichtung herausgezogen wird. Die Berührungsschutzvorrichtung ist dabei so geschaffen, dass ein einfaches Einführen von anderen Gegenständen als das Einführen eines zugehörigen Steckers wirkungsvoll verhindert wird, weil dann die Steuerelemente 29, 30, 31 der Lösehebeleinrichtung 7 in Verbindung mit den Steuernasen 38, den Steuerflächen 39 und den Rampenflächen 40 des Sperrelementes 26 verhindern, dass die Steckeröffnungen 25 für den Durchtritt freigegeben werden. Nur beim Einführen eines geeigneten Steckers wird das Sperrelement 26 beiseite geschoben und gibt damit die Steckeröffnungen 25 frei, so dass die Steckerstifte des geeigneten Steckers ordnungsgemäß mit den spannungsführenden Kontaktteilen 21 der Schutzkontaktsteckdose in Verbindung treten können.

## Patentansprüche

1. Elektrische Steckvorrichtung, insbesondere Schutzkontaktsteckdose mit einem, die zur Kontaktierung der Steckerstifte sowie der elektrischen Kabel notwendigen Kontaktteile aufnehmenden, einen Träger aufweisenden Sockelteil, an welchem ein zur Aufnahme des anzuschließenden Steckers vorgesehenes Steckdosenzentralstück befestigbar ist und wobei eine Berührungsschutzvorrichtung vorgesehen ist, die die zur Einführung der beiden Steckerstifte vorgesehenen Steckeröffnungen automatisch sperrt und nur dann freigibt, wenn die beiden Steckerstifte des Steckers gleichzeitig in die Steckeröffnungen eingeführt werden, **dadurch gekennzeichnet, dass** das federbelastete Sperrelement (26) mit seiner Oberseite (27) gleitend an der den Kontaktteilen (21) zugewandten Innenfläche (28) einer am Sockelteil (1) festlegbaren Lösehebeleinrichtung (7) zur Anlage kommt, und dass die mit dem Sperrelement (26) zusammenwirkenden Steuermittel (29, 30, 31) einstückig an der Innenfläche (28) der Lösehebeleinrichtung (7) vorhanden sind.

2. Elektrische Steckvorrichtung nach Anspruch 1, **dadurch gekennzeichnet, dass** zumindest ein Sperrelement (26) als Drehstück ausgeführt ist.

3. Elektrische Steckvorrichtung nach Anspruch 1 oder 2, **dadurch gekennzeichnet, dass** zumindest ein Sperrelement (26) als Schiebestück ausgeführt ist.

4. Elektrische Steckvorrichtung nach einem der Ansprüche 1 bis 3, **dadurch gekennzeichnet, dass** zumindest ein Sperrelement (26) mit einem als Schraubendruckfeder (32) ausgebildeten Federmittel zusammenwirkt.

5. Elektrische Steckvorrichtung nach einem der Ansprüche 1 bis 4, **dadurch gekennzeichnet, dass** zumindest ein erstes Steuermittel (29) als eine in die Innenfläche (28) der Lösehebeleinrichtung (7) eingeformte Ausnehmung ausgeführt ist, welche zumindest mit einer an das Sperrelement (26) angeformten Steuernase (38) zusammenwirkt.

6. Elektrische Steckvorrichtung nach einem der Ansprüche 1 bis 5, **dadurch gekennzeichnet, dass** zumindest ein zweites Steuermittel (30) als ein an die Innenfläche (28) der Lösehebeleinrichtung (7) angeformter Steuerzapfen ausgeführt ist, welcher mit zumindest einer am Sperrelement (26) vorhandenen Steuerfläche (39) zusammenwirkt.

7. Elektrische Steckvorrichtung nach einem der Ansprüche 1 bis 6, **dadurch gekennzeichnet, dass** zumindest ein drittes Steuermittel (31) als eine an die Innenfläche (28) der Lösehebeleinrichtung (7) angeformte Steuerrampe ausgeführt ist, welche mit zumindest einer am Sperrelement (26) vorhandenen Rampenfläche (40) zusammenwirkt.

8. Elektrische Steckvorrichtung nach einem der Ansprüche 1 bis 7, **dadurch gekennzeichnet, dass** die Lösehebeleinrichtung (7) zumindest eine U-förmig ausgebildete Rasteinrichtung (8) aufweist, welche mit zumindest einer Rastnase (17) versehen ist, die rastend mit zumindest einem an den zugehörigen Bedienschenkel (6) einer Spreizkralle (3) angeformten Rasthaken (18) in Wirkverbindung kommt.

9. Elektrische Steckvorrichtung nach einem der Ansprüche 1 bis 8, **dadurch gekennzeichnet, dass** an die Lösehebeleinrichtung (7) einstückig zumindest ein Lösehebel (20) angeformt ist.
